# EUROPEAN PATENT APPLICATION

(11) **EP 4 835 107 A1**
(43) Date of publication of application: **04.11.2026**
(21) Application number: 26175237.2
(22) Date of filing: 28.04.2026
(51) Int. Cl.: C22C 19/05, B33Y 70/00, B33Y 80/00, C22C 30/00

(54) **HIGH ENTROPY ALLOY FOR HOT SECTION COMPONENTS**

(30) Priority: 30.04.2025 IN 202511041667; 27.08.2025 US 202519311523
(71) Applicant: General Electric Company, Cincinnati, Ohio 45215 (US)
(72) Inventor: SWAMINATHAN, Srinivasan, 560066 Bengaluru (IN)
(74) Representative: Openshaw & Co.

(57) **Abstract**

An alloy is provided that includes: AlxCoyCrzFemNinTipWqTarNbs where: x is 0 to 10 wt.%, y is 0 to 25 wt.%, z is 0 to 15 wt.%, m is 0 to 15 wt.%, p is 0 to 10 wt.%, q is 0 to 1 wt.%, r is 0 to 2 wt.%, s is 0 to 10 wt.%, and n is greater than 40 wt.%, wherein at least four of x, y, z, m, p, q and r are greater than 0 wt. %. Cast components (100) and coated components (102) are also provided, along with their methods of formation.

## Description

### FIELD

The present disclosure relates to high entropy alloys, along with cast components and coated components that include such high entropy alloys.

### BACKGROUND

Gas turbine engines, such as turbofan engines, may be used for aircraft propulsion. A gas turbine engine generally includes a turbomachine and a rotor assembly. In the case of a turbofan engine, the rotor assembly may be configured as a fan assembly.

Various components within the gas turbine engine are exposed to high temperatures and pressures. For example, temperatures within a gas turbine engine can exceed 1600 °C. This requires the manufacture of parts with materials which are highly resistant to high temperature oxidation, spalling and creep.

Components have traditionally been coated with MCrAlY-type alloys. However, in some conditions, these alloys may still experience some degree of creep and oxidation.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1A is a cross-sectional view of a cast component in accordance with an exemplary aspect of the present disclosure;
FIG. 1B is a cross-sectional view of a coated component in accordance with an exemplary aspect of the present disclosure;
FIG. 2 is a cross-sectional view of a gas turbine engine in accordance with an exemplary aspect of the present disclosure;
FIG. 3A, FIG. 3B, and FIG. 3C are micrographs of exemplary alloys as described herein;
FIG. 4A, FIG. 4B, FIG. 4C, and FIG. 4D are micrographs of exemplary alloys after undergoing aging at 900 °C for varying periods of time;
FIG. 5 is a graph showing the decreased coarsening rate of alloys as a function of temperature as described herein; and
FIG. 6 is a graph showing the elemental distribution across gamma / gamma prime phase boundaries.

### DEFINITIONS

As used herein, the word "exemplary" means "serving as an example, instance, or illustration." Any implementation described herein as "exemplary" is not necessarily to be construed as preferred or advantageous over other implementations. Additionally, unless specifically identified otherwise, all embodiments described herein should be considered exemplary. In fact, it will be apparent to those skilled in the art that various modifications and variations can be made in the present disclosure without departing from the scope of the disclosure. For instance, features illustrated or described as part of one embodiment can be used with another embodiment to yield a still further embodiment. Thus, it is intended that the present disclosure covers such modifications and variations as come within the scope of the appended claims and their equivalents.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines. The term "turbomachine" or "turbomachinery" refers to a machine including one or more compressors, a heat generating section (e.g., a combustion section), and one or more turbines that together generate a torque output.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth.

In the present disclosure, when a layer is being described as "on" or "over" another layer or substrate, it is to be understood that the layers can either be directly contacting each other or have another layer or feature between the layers, unless expressly stated to the contrary. Thus, these terms are simply describing the relative position of the layers to each other and do not necessarily mean "on top of' since the relative position above or below depends upon the orientation of the device to the viewer.

As used herein, the term "solvus temperature" refers to the generally agreed upon temperature at which an alloy transitions from being monophasic to polyphasic. In some embodiments, polyphasic is understood to mean two phases. In some embodiments, polyphasic is understood to mean more than two phases. In some embodiments, an alloy may exist primarily within the gamma (γ) phase when its temperature does not exceed the solvus temperature. Further, in some embodiments, an alloy may exist as a combination of a gamma phase and a gamma prime (γ') phase, when its temperature is allowed to exceed the solvus temperature. Furthermore, in some embodiments, a gamma double prime (γ") phase can be formed.

As used herein, the term "high entropy alloy" ("HEA") refers to an alloy formed by mixing equal or relatively large atomic proportions (i.e., at least 5 at.%) of five or more elements. In particular, a high entropy alloy is used to describe an alloy with five or more metallic elements, each having 5 at.% to 35 at.%.

As used herein, the term "substantially free" is understood to mean completely free of said constituent, or inclusive of trace amounts of the same. "Trace amounts" are those quantitative levels of chemical constituent that are barely detectable and provide no benefit to the functional or aesthetic properties of the subject composition. The term "substantially free" also encompasses completely free.

As used herein, the term "substantially equal" is understood to be inclusive of a minor trace variation of a quantitative level that is barely detectable and provides no benefit to the functional or aesthetic properties of the subject composition. For example, "substantially equal" may refer to being within a 1 percent margin (i.e., including values within 1 percent of the stated value). The term "substantially equal" also encompasses completely equal.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The present disclosure is generally related to alloy compositions that may exhibit high strength and wide temperature operating windows. Furthermore, the present disclosure provides methods for forming alloys, along with methods for forming parts therefrom, and coatings comprising the composition as described above. While the present disclosure does not describe all potential use cases for the composition of matter described herein, it will be apparent to one of skill in the art that the present composition may be adapted for use in various applications without departing from the spirit of the present disclosure.

As stated above, in embodiments, high entropy alloys may be defined by having 5-35 at.% of five or more elements. In some embodiments, the elements may include at least five of aluminum, cobalt, chromium, iron, nickel, titanium, tungsten, tantalum, or niobium. In some embodiments of the present disclosure, the high entropy alloy may comprise the following formula:

AlₓCo_{y}Cr_{z}FeₘNiₙTiₚW_{q}TaᵣNbₛ

where x is 0 to 10 wt.%, y is 0 to 25 wt.%, z is 0 to 15 wt.%, m is 0 to 15 wt.%, p is 0 to 10 wt.%, q is 0 to 1 wt.%, r is 0 to 2 wt.%, s is 0 to 10 wt.%, and n is greater than 40 wt.%, and where at least four of x, y, z, m, p, q and r are greater than 0 wt. %. In embodiments, at least five of x, y, z, m, p, q and r are greater than 0 wt. %.

In embodiments, x is 0 to 10 wt.%, such as 4 to 9 wt.%, such as 5 to 8 wt.%. In embodiments, y is 0 to 25 wt.%, such as 15 wt.% to 23 wt.%, such as 19 to 21 wt.%. In embodiments, z is 0 to 15 wt.%, such as 8 to 13 wt.%, such as 10 to 12 wt.%. In embodiments, m is 0 to 15 wt.%, such as 5 to 11 wt.%. In embodiments, p is 0 to 10 wt.%, such as 4 to 8 wt.%. In embodiments, q is 0 to 1 wt.%, such as 0.5 to 1 wt.%. In embodiments, r is 0 to 2 wt.%, such as 0.5 to 1.5 wt.%.

With respect to nickel, n is greater than 40 wt.%, such as greater than 50 wt.%. In such embodiments, the alloy composition is a Ni-based HEA.

In embodiments, niobium may or may not be present in the alloy. In embodiments, s is 0 to 10 wt.%, such as 4 to 9 wt.%, such as 5 to 8 wt.%.

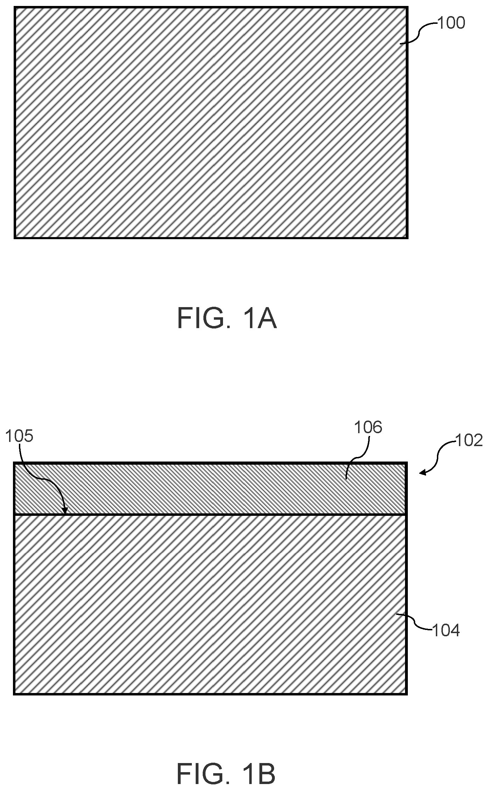

The alloy may be formed into a component (e.g., a cast component or an additively manufactured component) or as a coating of a coated component. For instance, a component 100 is shown in FIG. 1A. The component 100 includes the high entropy alloy discussed herein. In embodiments, the component 100 includes 90 wt.% or greater of the high entropy alloy, such as 99% or greater of the high entropy alloy (e.g., consisting essentially of the high entropy alloy, with only minor impurities therein). In embodiments, component 100 may be a cast component formed of the high entropy alloy. Alternatively, the component 100 may be a additively manufactured component formed of the high entropy alloy.

FIG. 1B shows an embodiment of a coated component 102 having a substrate 104 and a coating 106 thereon. The coating 106 may be directly on a surface 105 of the substrate 104, as shown, or intermediate coatings may be present there between. The substrate 104 may be any suitable alloy material (e.g., a nickel-based superalloy). In embodiments, the coating 106 includes the high entropy alloy discussed herein. In embodiments, the coating 106 includes 90 wt.% or greater of the high entropy alloy, such as 99% or greater of the high entropy alloy (e.g., consisting essentially of the high entropy alloy, with only minor impurities therein).

In some embodiments, the high entropy alloy of the cast component 100 (FIG. 1A) or substrate 104 (FIG. 1B) may comprise two or more phases. These phases may be a gamma phase and gamma prime phase, also described as a γ and γ' phase respectively. In some embodiments, when the high entropy alloy comprises titanium, aluminum, tantalum, or mixtures thereof, a gamma prime phase may be formed. The gamma prime phase may be precipitated from the gamma phase by solutionizing the high entropy alloy by heating it to above its solvus temperature. In some embodiments, greater than 30 vol. % of the high entropy alloy is in the gamma prime phase, such as greater than 40 vol. %, such as greater than 50 vol. %, such as greater than 60 vol. %, such as greater than 70 vol. %. Similarly, the alloy may comprise less than 70 vol. % of the gamma prime phase, such as a less than 50 vol. %, such as less than 40 vol. %. This vol. % may be calculated from an image by measuring the area fraction (in the 2D image) of the gamma prime phase, and then convert to the volume fraction by assuming that the area fraction is 1:1 to the volume fraction (i.e., area fraction of 2D is equal to the volume % in 3D). The percent of the high entropy alloy in the gamma prime phase may be controlled by varying the temperature in excess of the solvus temperature at which the solutionizing occurs, as well as the duration of the solutionizing.

Solutionizing may be performed by subjecting an alloy to a temperature above its solvus temperature for a duration of time. Said duration of time, in some embodiments, is greater than 10 hours, such as greater than 30 hours, such as greater than 50 hours, such as greater than 100 hours, such as greater than 150 hours, such as greater than 300 hours, such as greater than 550 hours, such as greater than 800 hours. Similarly, solutionizing may comprise heating the alloy to a temperature above its solvus temperature for a duration of time less than 1000 hours, such as less than 850 hours, such as less than 700 hours, such as less than 400 hours, such as less than 200 hours, such as less than 100 hours.

After the formation of at least a gamma prime phase following solutionizing, the alloy may be said to have a partitioned elemental composition. That is, some elements may have greater elemental distributions in either of the gamma phase, gamma prime phase, or gamma double prime phase than in at least one of the other phases. For instance, in some embodiments, after solutionizing, the gamma prime phase has a higher content of nickel than the gamma phase. Further, in some embodiments where the high entropy alloy comprises titanium, aluminum, or mixtures thereof, the gamma prime phase has a higher content of titanium, aluminum, or mixtures thereof, than the gamma phase following solutionizing. In contrast to this, the gamma phase may have a higher content of iron, chromium and/or cobalt than the gamma prime phase in embodiments of the present disclosure wherein the high entropy alloy comprises iron, chromium, cobalt or mixtures thereof.

In some embodiments of the present disclosure, the high entropy alloy may comprise a third phase. Said third phase, known as the gamma double prime, or γ" phase, may be present in the high entropy alloy when the high entropy alloy comprises niobium.

In some embodiments, the high entropy alloy as described herein may comprise cobalt, chromium, iron, or mixtures thereof. The inclusion of the Co, Cr, Fe, or a mixture of these elements may promote solid solution strengthening of the gamma phase. In some embodiments, the high entropy alloy as described herein may comprise tungsten. Tungsten may promote solid solution strengthening of both the gamma phase and gamma double prime phase. In some embodiments, the high entropy alloy as described herein may comprise titanium, niobium, tungsten, or mixtures thereof. The inclusion of Ti, N, W, or mixtures thereof may lead to the formation of carbides when carbon is present. In some embodiments, the high entropy alloy as described herein may comprise chromium, aluminum, or a combination thereof. The inclusion of Cr and/or Al may assist in forming oxides at high temperatures which protect the material, such as a component, underlying the oxidized alloy.

In some embodiments of the present disclosure, the high entropy alloy described herein may be substantially free of iron. Without wishing to be bound to any particular theory, it is believed that eliminating iron in the high entropy alloy can lead to the solvus temperature of the high entropy alloy increasing as compared to high entropy alloys which contain iron.

Further, as stated above, components formed from high entropy alloys as described herein may exhibit increased temperature operating windows, increased creep resistance, and reduced oxidation. In some embodiments, components within the hot gas path of a gas turbine engine may be formed of alloys described herein.

As described herein, the presently disclosed subject matter involves the use of additive manufacturing machines or systems. As used herein, the term "additive manufacturing" refers generally to manufacturing technology in which components are manufactured in a layer-by-layer manner. An exemplary additive manufacturing machine may be configured to utilize any suitable additive manufacturing technology. The additive manufacturing machine may utilize an additive manufacturing technology that includes a powder bed fusion (PBF) technology, such as a direct metal laser melting (DMLM) technology, a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature and may have a variety of integral sub-components.

Additionally or alternatively suitable additive manufacturing technologies may include, for example, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, and other additive manufacturing technologies that utilize an energy beam or other energy source to solidify an additive manufacturing material such as a powder material. In fact, any suitable additive manufacturing modality may be utilized with the presently disclosed subject matter.

Additive manufacturing technology may generally be described as fabrication of objects by building objects point-by-point, line-by-line, layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes. In embodiments wherein layer-additive processes are used, each successive layer may be, for example, between about 10 µm and 200 µm, although the thickness may be determined based on any number of parameters and may be any suitable size.

As used herein, the term "build plane" refers to a plane defined by a surface upon which an energy beam impinges to selectively irradiate and thereby consolidate powder material during an additive manufacturing process. Generally, the surface of a powder bed defines the build plane. During irradiation of a respective layer of the powder bed, a previously irradiated portion of the respective layer may define a portion of the build plane. Prior to distributing powder material across a build module, a build plate that supports the powder bed generally defines the build plane.

As used herein, the term "consolidate" or "consolidating" refers to solidification of powder material as a result of irradiating the powder material, including by way of melting, fusing, sintering, or the like.

The alloy as described herein may be formed upon a component, in need of repair or not, as a coating. Exemplary methods for forming coatings upon components may include, but are not limited to, suspension plasma spraying or thermal spraying, cold spraying.

In some embodiments, the high entropy alloy as described herein may be used to form parts of or whole components. Methods for making said components may vary, and include, but are not limited to, forging, casting, plating, welding and brazing.

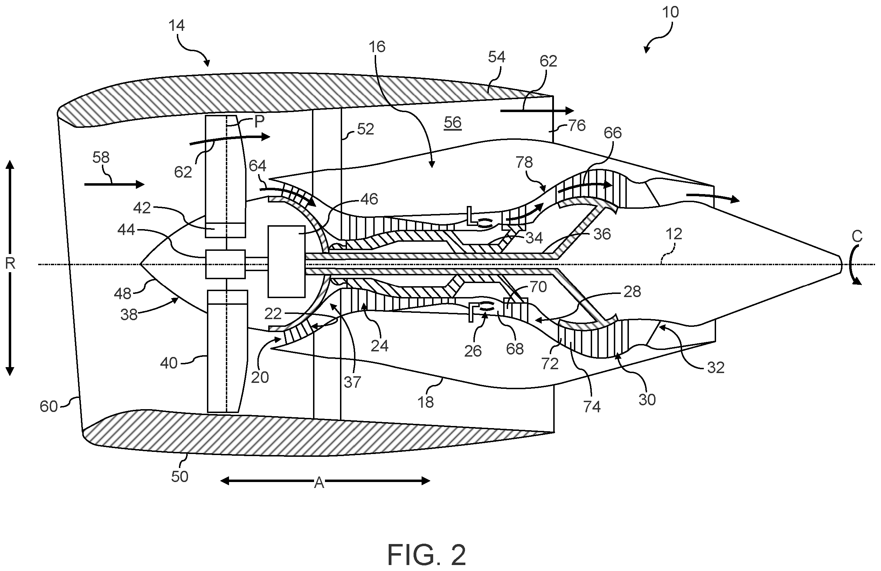

Referring now to the drawings, wherein identical numerals indicate the same elements throughout the figures, FIG. 2 is a schematic cross-sectional view of a gas turbine engine in accordance with an exemplary embodiment of the present disclosure which may include parts comprising the high entropy alloys as described herein. More particularly, for the embodiment of FIG. 2, the gas turbine engine is a high-bypass turbofan jet engine, sometimes also referred to as a "turbofan engine." As shown in FIG. 2, the gas turbine engine 10 defines an axial direction A (extending parallel to a longitudinal centerline 12 provided for reference), a radial direction R, and a circumferential direction C extending about the longitudinal centerline 12. In general, the gas turbine engine 10 includes a fan section 14 and a turbomachine 16 disposed downstream from the fan section 14.

The exemplary turbomachine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft 34 (which may additionally or alternatively be a spool) drivingly connects the HP turbine 28 to the HP compressor 24. A low pressure (LP) shaft 36 (which may additionally or alternatively be a spool) drivingly connects the LP turbine 30 to the LP compressor 22. The compressor section, combustion section 26, turbine section, and jet exhaust nozzle section 32 together define a working gas flowpath 37.

For the embodiment depicted, the fan section 14 includes a fan 38 having a plurality of fan blades 40 coupled to a disk 42 in a spaced apart manner. As depicted, the fan blades 40 extend outwardly from disk 42 generally along the radial direction R. Each fan blade 40 is rotatable relative to the disk 42 about a pitch axis P by virtue of the fan blades 40 being operatively coupled to a suitable pitch change mechanism 44 configured to collectively vary the pitch of the fan blades 40, e.g., in unison. The gas turbine engine 10 further includes a power gear box 46, and the fan blades 40, disk 42, and pitch change mechanism 44 are together rotatable about the longitudinal centerline 12 by LP shaft 36 across the power gear box 46. The power gear box 46 includes a plurality of gears for adjusting a rotational speed of the fan 38 relative to a rotational speed of the LP shaft 36, such that the fan 38 may rotate at a more efficient fan speed.

Referring still to the exemplary embodiment of FIG. 2, the disk 42 is covered by rotatable front hub 48 of the fan section 14 (sometimes also referred to as a "spinner"). The front hub 48 aerodynamically contoured to promote an airflow through the plurality of fan blades 40.

Additionally, the exemplary fan section 14 includes an annular fan casing or outer nacelle 50 that circumferentially surrounds the fan 38 and/or at least a portion of the turbomachine 16. It should be appreciated that the nacelle 50 is supported relative to the turbomachine 16 by a plurality of circumferentially-spaced outlet guide vanes 52 in the embodiment depicted. Moreover, a downstream section 54 of the nacelle 50 extends over an outer portion of the turbomachine 16 so as to define a bypass airflow passage 56 therebetween.

During operation of the gas turbine engine 10, a volume of air 58 enters the gas turbine engine 10 through an associated inlet 60 of the nacelle 50 and fan section 14. As the volume of air 58 passes across the fan blades 40, a first portion of air 62 is directed or routed into the bypass airflow passage 56 and a second portion of air 64 as indicated by arrow 64 is directed or routed into the working gas flowpath 37, or more specifically into the LP compressor 22. The ratio between the first portion of air 62 and the second portion of air 64 is commonly known as a bypass ratio. A pressure of the second portion of air 64 is then increased as it is routed through the HP compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft 34, thus causing the HP shaft 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft 36, thus causing the LP shaft 36 to rotate, thereby supporting operation of the LP compressor 22 and/or rotation of the fan 38.

The combustion gases 66 are subsequently routed through the jet exhaust nozzle section 32 of the turbomachine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the gas turbine engine 10, also providing propulsive thrust. The HP turbine 28, the LP turbine 30, and the jet exhaust nozzle section 32 at least partially define a hot gas path 78 for routing the combustion gases 66 through the turbomachine 16.

It should be appreciated, however, that the exemplary gas turbine engine 10 depicted in FIG. 2 is by way of example only, and that in other exemplary embodiments, the gas turbine engine 10 may have any other suitable configuration. For example, although the gas turbine engine 10 depicted is configured as a ducted gas turbine engine (i.e., including the outer nacelle 50), in other embodiments, the gas turbine engine 10 may be an unducted gas turbine engine (such that the fan 38 is an unducted fan, and the outlet guide vanes 52 are cantilevered from the outer casing 18). Additionally, or alternatively, although the gas turbine engine 10 depicted is configured as a geared gas turbine engine (i.e., including the power gear box 46) and a variable pitch gas turbine engine (i.e., including a fan 38 configured as a variable pitch fan), in other embodiments, the gas turbine engine 10 may additionally or alternatively be configured as a direct drive gas turbine engine (such that the LP shaft 36 rotates at the same speed as the fan 38), as a fixed pitch gas turbine engine (such that the fan 38 includes fan blades 40 that are not rotatable about a pitch axis P), or both. It should also be appreciated, that in still other exemplary embodiments, aspects of the present disclosure may be incorporated into any other suitable gas turbine engine. For example, in other exemplary embodiments, aspects of the present disclosure may (as appropriate) be incorporated into, e.g., a turboprop gas turbine engine, a turboshaft gas turbine engine, or a turbojet gas turbine engine.

In embodiments of the present disclosure, components within the hot gas path 78 may comprise a high entropy alloy as described herein. For instance, components comprising the HP turbine 28, LP turbine 30, and jet exhaust nozzle section 32 may comprise a high entropy alloy. In some embodiments, the high pressure (HP) compressor 24 may comprise a high entropy alloy as described herein. Furthermore, the above listing is not intending to be limiting. For instance, components such as the HP turbine rotor blades 70, which are part of the HP turbine 28, may comprise a high entropy alloy as described herein. In some embodiments, parts outside of the hot gas path, such as the combustion section 26, may be formed of a high entropy alloy as described herein.

### EXAMPLES

While certain embodiments of the disclosed subject matter have been described using specific terms, such description is for illustrative purposes only, and it is to be understood that changes and variations may be made without departing from the spirit or scope of the subject matter.

Exemplary alloys as described herein was formed by melting a batch mixture containing powders of aluminum, cobalt, chromium, nickel, titanium and varying amounts of iron. The specific composition of each exemplary alloy is listed below in Table 1. All values listed are in wt.%.

**Table 1**

| Element | Exemplary Alloy 1 | Exemplary Alloy 2 | Exemplary Alloy 3 |
|---|---|---|---|
| Al | 7.8 | 7.8 | 7.8 |
| Co | 20.6 | 20.6 | 20.6 |
| Cr | 12.2 | 12.2 | 12.2 |
| Ni | 40.7 | 47.2 | 52.2 |
| Ti | 7.2 | 7.2 | 7.2 |
| Fe | 11.5 | 5 | 0 |

The three alloys were then subject to solutionizing. Exemplary alloy 1 was subject to solutionizing at 1180 Celsius for 20 hours, whereas exemplary alloys 2 and 3 were subject to solutionizing at 1230 Celsius for 20 hours.

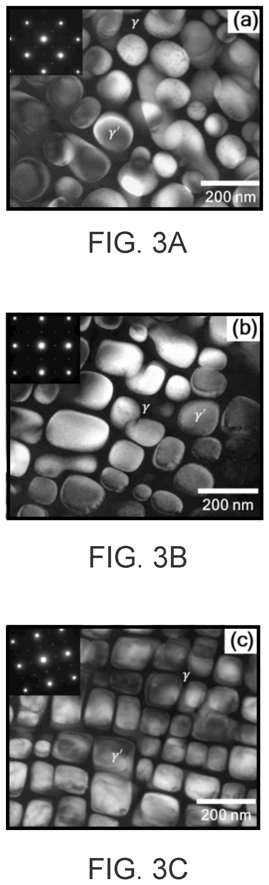

FIGS. 3A, 3B, and 3C are SEM micrographs of the exemplary high entropy alloys described herein. The gamma prime phase is shown as a precipitate. FIG. 3A is a SEM micrograph of exemplary alloy 1. FIG. 3B is a SEM micrograph of exemplary alloy 2. FIG. 3C is a SEM micrograph of exemplary alloy 3.

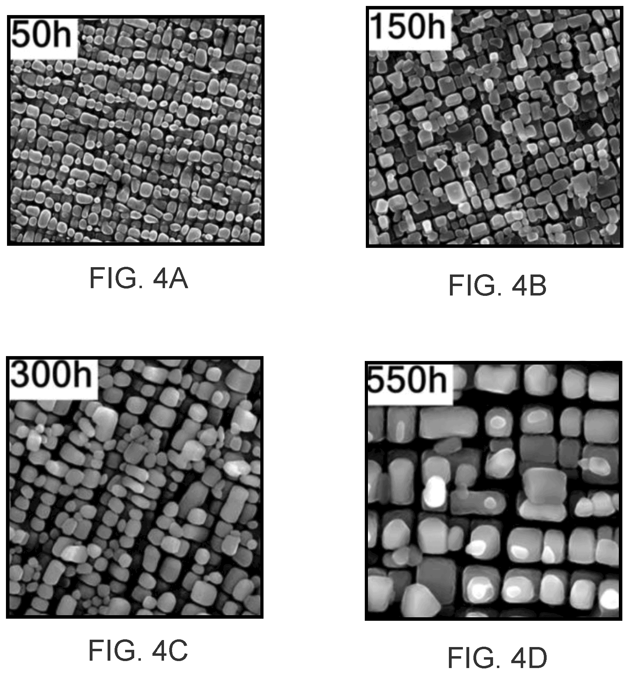

FIGS. 4A, 4B, 4C and 4D are micrographs of exemplary alloy 1 after being subjected to solutionizing at 900 °C for A) 50 hours, B) 150 hours, C) 300 hours and D) 550 hours.

For the three exemplary alloys above, the solvus temperature was experimentally determined. The results are shown in Table 2 below.

**Table 2**

| Alloy | Solvus Temperature °C |
|---|---|
| Exemplary Alloy 1 | 1109 |
| Exemplary Alloy 2 | 1171 |
| Exemplary Alloy 3 | 1199 |

As can be seen in Table 2 above, the exemplary alloys had solvus temperatures at or exceeding 1109 °C. In contrast, typical nickel-based alloys (e.g., Inconel 718) have solvus temperatures in the range of 1000 °C - 1100 °C. Without wishing to be limited by any particular theory, it is believed that the increased solvus temperature allows for parts formed from the exemplary high entropy alloys as described herein to maintain their integrity at higher temperatures.

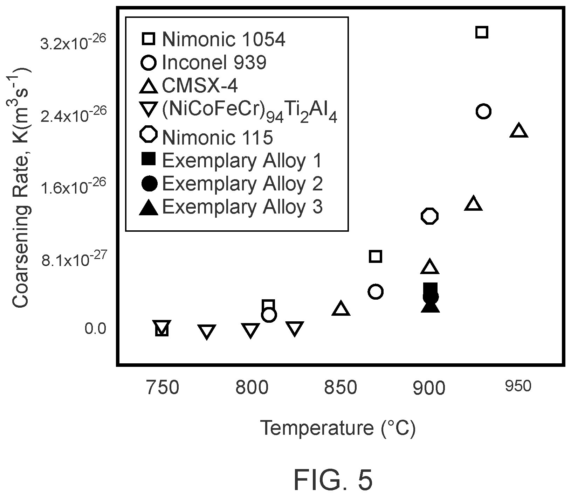

FIG. 5 is a graph showing the coarsening rate of the exemplary alloys 1-3 compared against traditional nickel-based alloys. As seen in FIG. 5, the exemplary alloys 1-3 have lower coarsening rates at elevated temperatures as compared to the nickel-based alloys. The coarsening rates refers to gamma prime coarsening. The lower coarsening rate at the elevated temperature leads to the exemplary alloys 1-3 maintaining their strength over a longer time period, compared to the nickel-based alloys.

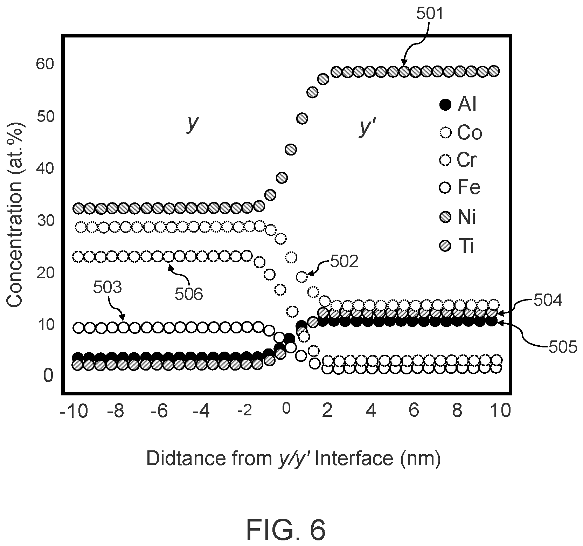

FIG. 6 is a graph showing the elemental composition of an exemplary alloy as described herein as compared to the distance from the gamma / gamma prime interface. Trace line 501 represents the distribution of nickel in the alloy. Trace line 502 represents the distribution of cobalt in the alloy. Trace line 503 represents the distribution of iron in the alloy. Trace line 504 represents the distribution of titanium in the alloy. Trace line 505 represents the distribution of aluminum in the alloy. Trace line 506 represents the distribution of chromium in the alloy. The elemental distribution shown in FIG. 6 proves that a gamma prime phase is formed in the exemplary alloy.

Further aspects are provided by the subject matter of the following clauses:

An high entropy alloy comprising: AlₓCo_{y}Cr_{z}FeₘNiₙTiₚW_{q}TaᵣNbₛ where: x is 0 to 10 wt.%, y is 0 to 25 wt.%, z is 0 to 15 wt.%, m is 0 to 15 wt.%, p is 0 to 10 wt.%, q is 0 to 1 wt.%, r is 0 to 2 wt.%, s is 0 to 10 wt.%, and n is greater than 40 wt.%, wherein at least four of x, y, z, m, p, q and r are greater than 0 wt. %.

The high entropy alloy of any preceding clause, wherein at least five of x, y, z, m, p, q and r are greater than 0.

The high entropy alloy of any preceding clause, where s is 0.

The high entropy alloy of any preceding clause, wherein m is less than 1 wt.%.

The high entropy alloy of any preceding clause, wherein q is 0.5 to 1 wt. %.

The high entropy alloy of any preceding clause, wherein m is 0 wt.%.

The high entropy alloy of any preceding clause, wherein the Al, Co, Cr, Ni, and Ti comprise 95 wt.% or more of the composition.

The high entropy alloy of any preceding clause, wherein r is 0 and s is 0.

A cast component comprising the high entropy alloy of claim 1.

A cast component comprising an high entropy alloy having a formula: AlₓCo_{y}Cr_{z}FeₘNiₙTiₚW_{q}TaᵣNbₛ wherein, x is 0 to 10 wt.%, y is 0 to 25 wt.%, z is 0 to 15 wt.%, m is 0 to 15 wt.%, p is 0 to 10 wt.%, q is 0 to 1 wt.%, r is 0 to 2 wt.%, s is 0 to 10 wt.%, and n is greater than 40 wt.%, wherein at least four of x, y, z, m, p, q and r are greater than 0.

The cast component of any preceding clause, wherein at least five of x, y, z, m, p, q and r are greater than 0.

The cast component of any preceding clause, wherein s is 0.

The cast component of any preceding clause, wherein r is 0.

The cast component of any preceding clause, wherein m is less than 1 wt.%.

The cast component of any preceding clause, wherein m is 0 wt.%.

The cast component of any preceding clause, wherein the cast component includes a gamma phase and a prime phase.

The cast component of any preceding clause, wherein the high entropy alloy comprises greater than 40% by weight of the gamma prime phase.

The cast component of any preceding clause, wherein the cast component has a solvus temperature greater than 815 °C.

The cast component of any preceding clause, wherein the cast component has a solvus temperature greater than 1090 °C.

A method of forming the cast component of any preceding clause.

A coated component, comprising: a substrate having a surface, and a coating on the surface of the substrate, wherein the coating comprises an high entropy alloy having a formula AlₓCo_{y}Cr_{z}FeₘNiₙTiₚW_{q}TaᵣNbₛ wherein, x is 0 to 10 wt.%, y is 0 to 25 wt.%, z is 0 to 15 wt.%, m is 0 to 15 wt.%, p is 0 to 10 wt.%, q is 0 to 1 wt.%, r is 0 to 2 wt.%, s is 0 to 10 wt.%, and n is greater than 40 wt.%, wherein at least four of x, y, z, m, p, q and r are greater than 0.

The coated component of any preceding clause, wherein the coating has a layered structure formed by additive manufacturing.

A method of forming the coated component of any preceding clause.

A component comprising a high entropy alloy having a formula: AlₓCo_{y}Cr_{z}FeₘNiₙTiₚW_{q}TaᵣNbₛ wherein, x is 0 to 10 wt.%, y is 0 to 25 wt.%, z is 0 to 15 wt.%, m is 0 to 15 wt.%, p is 0 to 10 wt.%, q is 0 to 1 wt.%, r is 0 to 2 wt.%, s is 0 to 10 wt.%, and n is greater than 40 wt.%, wherein at least four of x, y, z, m, p, q and r are greater than 0.

The component of any preceding clause, wherein the component is a cast component.

The component of any preceding clause, wherein the component is an additively manufactured component.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An alloy comprising:
AlₓCo_{y}Cr_{z}FeₘNiₙTiₚW_{q}TaᵣNbₛ
where:
x is 0 to 10 wt.%,
y is 0 to 25 wt.%,
z is 0 to 15 wt.%,
m is 0 to 15 wt.%,
p is 0 to 10 wt.%,
q is 0 to 1 wt.%,
r is 0 to 2 wt.%,
s is 0 to 10 wt.%, and
n is greater than 40 wt.%, wherein at least four of x, y, z, m, p, q and r are greater than 0 wt. %.

2. The alloy of claim 1, wherein at least five of x, y, z, m, p, q and r are greater than 0.

3. The alloy of any preceding claim, where s is 0.

4. The alloy of any preceding claim, wherein m is less than 1 wt.%.

5. The alloy of any preceding claim, wherein q is 0.5 to 1 wt. %.

6. The alloy of any preceding claim, wherein m is 0 wt.%; optionally wherein the Al, Co, Cr, Ni, and Ti comprise 95 wt.% or more of the composition.

7. The alloy of any preceding claim, wherein r is 0 and s is 0.

8. A cast component (100) comprising the alloy of claim 1 having a formula:
AlₓCo_{y}Cr_{z}FeₘNiₙTiₚW_{q}TaᵣNbₛ
wherein,
x is 0 to 10 wt.%,
y is 0 to 25 wt.%,
z is 0 to 15 wt.%,
m is 0 to 15 wt.%,
p is 0 to 10 wt.%,
q is 0 to 1 wt.%,
r is 0 to 2 wt.%,
s is 0 to 10 wt.%, and
n is greater than 40 wt.%, wherein at least four of x, y, z, m, p, q and r are greater than 0.

9. The cast component (100) of claim 8, wherein at least five of x, y, z, m, p, q and r are greater than 0.

10. The cast component (100) of any of claims 8-9, wherein s is 0; optionally wherein r is 0.

11. The cast component (100) of any of claims 8-10, wherein m is less than 1 wt.%; optionally wherein m is 0 wt.%.

12. The cast component (100) of any of claims 8-11, wherein the cast component includes a gamma phase and a prime phase; optionally wherein the alloy comprises greater than 40% by weight of the gamma prime phase.

13. The cast component (100) of any of claims 8-13, wherein the cast component has a solvus temperature greater than 815 °C; optionally wherein the cast component has a solvus temperature greater than 1090 °C.

14. A coated component (102), comprising:
a substrate (104) having a surface (105), and
a coating (106) on the surface (105) of the substrate (104), wherein the coating (106) comprises an alloy having a formula
AlₓCo_{y}Cr_{z}FeₘNiₙTiₚW_{q}TaᵣNbₛ
wherein,
x is 0 to 10 wt.%,
y is 0 to 25 wt.%,
z is 0 to 15 wt.%,
m is 0 to 15 wt.%,
p is 0 to 10 wt.%,
q is 0 to 1 wt.%,
r is 0 to 2 wt.%,
s is 0 to 10 wt.%, and
n is greater than 40 wt.%, wherein at least four of x, y, z, m, p, q and r are greater than 0.

15. The coated component (102) of claim 14, wherein the coating (105) has a layered structure formed by additive manufacturing.
